Europäisches Patentamt

European Patent Office

Office européen des brevets

(19)

(11) Veröffentlichungsnummer: **0 115 869**

**B1**

(12) **EUROPÄISCHE PATENTSCHRIFT**

(45) Veröffentlichungstag der Patentschrift: **15.06.88**

(51) Int. Cl.⁴: **D 06 N 7/00**, B 32 B 25/08

(21) Anmeldenummer: **84101161.2**

(22) Anmeldetag: **04.02.84**

(54) **Fussbodenbelag, insbesondere für Flugzeuge.**

(30) Priorität: **08.02.83 DE 3304232**

(43) Veröffentlichungstag der Anmeldung:
**15.08.84 Patentblatt 84/33**

(45) Bekanntmachung des Hinweises auf die
Patenterteilung:
**15.06.88 Patentblatt 88/24**

(84) Benannte Vertragsstaaten:
**DE FR GB IT SE**

(56) Entgegenhaltungen:
EP-A-0 051 212
DE-A-2 045 558
FR-A-1 375 828
FR-A-1 463 305
US-A-4 342 803

(73) Patentinhaber: **METZELER Gesellschaft mit
beschränkter Haftung
Gneisenaustrasse 15
D-8000 München 50 (DE)**

(72) Erfinder: **Gey, Mathias
Melkerstieg 2
D-2150 Buxtehude (DE)**
Erfinder: **Grote, Jürgen
Eppendorfer Landstrasse 24
D-2000 Hamburg 20 (DE)**
Erfinder: **Pittel, Horst
Heiterwangerstrasse 40
D-8000 München 70 (DE)**
Erfinder: **Samol, Gerd W.
Kirchhalde 8
D-8999 Heimenkirch (DE)**
Erfinder: **Zelt, Rainer
Gartenstrasse 1-3
D-8990 Lindau (DE)**

(74) Vertreter: **Michelis, Theodor, Dipl.-Ing.
Gneisenaustrasse 15
D-8000 München 50 (DE)**

Courier Press, Leamington Spa, England.

EP 0 115 869 B1

**Beschreibung**

Die Erfindung bezieht sich auf einen Fußbodenbelag, insbesondere für Flugzeuge, bestehend aus einer starren Unterschicht und einer oberen Kunststoffschicht.

In der Kabine von Verkehrsflugzeugen sind im allgemeinen die Fußbodenplatten mit textilem Teppichboden oder mit einem nicht textilen Belag (NTF) abgedeckt. NTF wird im allgemeinen nur im Cockpit und in der Naßbereichen, d.h. in den Toiletten und den Bordküchen verlegt, indem er mit den Fußbodenplatten verklebt wird.

Zur Überbrückung der Sitzschienen in der Kabine und zum Schutz der Fußbodenplatten gegen ein Durchstoßen des NTF bei hoher punktueller Belastung, z.B. durch spitze Absätze, wird vor dem Verkleben zunächst eine GFK-Platte verlegt.

Bei dieser getrennten Verlegung von NTF und GFK-Platten ist insbesondere der Arbeitsaufwand sehr nachteilig, der durch das gesonderte Zuschneiden und Verkleben der beiden Komponenten notwendig wird. Darüber hinaus ergibt sich daraus ein sehr hohes Flächengewicht, da der NTF für seine Eigenstabilität eine gewisse Mindestwanddicke benötigt.

Der Erfindung liegt daher die Aufgabe zugrunde, einen Fußbodenbelag zu schaffen, der einerseits eine geringe Dicke und damit ein geringes Flächengewicht aufweist, andererseits aber die notwendige Trittfestigkeit gewährleistet und im Brandfall wenig Rauch und wenig toxische Gase entwickelt.

Zur Lösung dieser Aufgabe ist erfindungsgemäß vorgesehen, daß die starre Schicht aus einem ausgehärteten, faserverstärkten Laminat auf Phenolharzbasis besteht, auf die unter Einfügung einer Primer- bzw. Grundierungsschicht eine Schicht aus einem flammwidrig eingestellten Polysiloxan aufvulkanisiert ist.

Eine Materialkombination bestehend aus einem faserverstärktem Laminat und einem aufvulkanisiertem Polysiloxan ist zwar aus der FR—A—1 463 305 bekannt, jedoch lediglich in Form von kreisförmigen Platten relativ geringer Größe als Abdeckung von Kondensatoren, um damit eine Isolierung der elektrischen Anschlüsse sicherzustellen. Derartige Plättchen dienen jedoch lediglich der Isolation, ohne hohe punktförmige Belastungen aufnehmen zu müssen.

Demgegenüber kann der erfindungsgemäße Fußbodenbelag kontinuierlich auf einer Auma hergestellt werden und ist stabil und resistent, insbesondere gegen punktförmige Belastungen hohen Gewichtes.

Zweckmäßige Ausgestaltungen der Erfindung sind in den Unteransprüchen genannt.

Die mit der Erfindung erzielten Vorteile beruhen zunächst auf der Verwendung von flammwidrigen Polysiloxanen, wie sie in der unter der Nr. 0051212 veröffentlichten europäischen Patentanmeldung der Bayer AG beschrieben werden. Diese Polysiloxane erfüllen alle an die Feuersicherheit gestellten Anforderungen optimal, wie durch entsprechende Brandprüfungen festgestellt werden konnte; dies gilt auch für die sehr strengen Anforderungen der Luftfahrtindustrie im Hinblick auf Rauchgasdichte und Toxizität der Rauchgase im Brandfall.

Die Schicht aus dem flammwidrigen Polysiloxan wird mit einer relativ geringen Dicke auf ein faserverstärktes Laminat aufvulkanisiert, welches die erforderliche mechanische Festigkeit dieser Struktur liefert. Das Laminat kann auf Phenolharz- oder einer anderen Harz-Basis aufgebaut sein, wobei gute Ergebnisse mit einer Glasfaser- oder Baumwollverstärkung erhalten wurden. Die Verstärkung kann als Vlies oder Gewebe eingestellt werden.

Die starre Laminat-Platte gewährleistet einerseits eine hervorragende Maßstabilität des Fußbodenbelages und verhindert außerdem das Durchtreten des Belages, und zwar auch dann, wenn die Stewardessen oder Passagiere Schuhe mit Bleistiftabsätzen tragen sollten. Außerdem läßt sich ein Fußbodenbelag mit einer Laminat-Platte als Träger besser auf die Fußbodenplatten aufkleben als ein gänzlich aus dem Polysiloxan bestehender Belag. Weiterhin bietet eine solche Laminat-Platte bereits bei relativ geringer Dicke eine ausreichende mechanische Festigkeit, so daß die Dicke des gesamten Fußbodenbelages und damit sein Flächengewicht extrem gering gehalten werden können, wie es bei der Entwicklung moderner Flugzeugtypen aus Gründen der Tredbstoffersparnis angestrebt wird.

Das Laminat hat eine Dicke von etwa 0,5—0,8 mm, während die Schicht aus dem Polysiloxan eine Dicke von etwa 0,3 bis 0,5 mm haben sollte. Wird die Schicht aus dem Polysiloxan mit einer Strukturierung versehen, so bezieht sich der angegebenen Dickenwert auf die Stärke an den tiefen Stellen der Struktur.

Die eventuell vorgesehene Struktur der Schicht aus dem Polysiloxan sollte rillenförmig verlaufen, damit Flüssigkeiten nur in eine bestimmte Richtung abfließen können. Außerdem soll die Struk-tur verhindern, daß sich verschüttete Flüssigkeiten stark ausbreiten. Gute Ergebnisse wurden erreicht, wenn die Struktur als imitierte Kordelung mit parallel zueinander verlaufenden Rillen ausgebildet wurde.

Zur Verbesserung der Verbindung zwischen dem Laminat und der Schicht aus dem flammwidrigen Polysiloxan wird die Oberfläche des Laminates vor dem Aufbringen des Polysiloxans mit einem Primer bzw. einer Grundierung versehen; gute Ergebnisse wurden mit einer Grundierung aus feuchtigkeitsempfindlichen Lösungen mehrfunktioneller Silane bzw. Polysiloxane in organischen Lösungsmitteln erreicht, wie sie beispielsweise von der Fa. Wacker-Chemie GmbH unter der Bezeichnung VP 3243 oder von der Bayer AG unter der Bezeichnung HV—L vertrieben werden.

Die Herstellung eines solchen Fußbodenbelages kann auf der auch als "AUMA" bezeichneten Rotationsvulkanisiermaschine erfolgen, wobei die Fertigung wahlweise in einem Schritt oder in zwei Schritten durchgeführt wird.

Bei der einstufigen Fertigung dient die Rotationsvulkanisiermaschine sowohl für die Aufbringung der Schicht aus dem Polysiloxan auf das Laminat als auch für die Vulkanisation der Polysiloxan-Schicht, während bei der zweistufigen Fertigung die Polysiloxan-Schicht zunächst in einem Walzenspalt auf die Oberfläche des Laminates aufgebracht und in einem zweiten Arbeitsgang dann die aufgebrachte Polysiloxan-Schicht mittels einer Rotationsvulkanisiermaschine auf das Laminat aufvulkanisiert wird.

Wird die Schicht aus dem Polysiloxan im oben erwähnten Sinne mit einer Struktur versehen, so wird nach einer bevorzugten Ausführungsform eine Rotationsvulkanisiermaschine verwendet, deren Oberfläche eine entsprechende Struktur hat.

Die Erfindung wird im folgenden anhand eines Ausführungsbeispiels unter Bezugnahme auf die beiliegenden, schematischen Zeichnungen näher erläutert. Es zeigen:

Fig. 1 im vergrößerten Maßstab einen Schritt durch einen Fußbodenbelag, und

Fig. 2 das Grundprinzip der Herstellung eines solchen Fußbodenbelages in einem einstufigen Verfahren mittels einer AUMA.

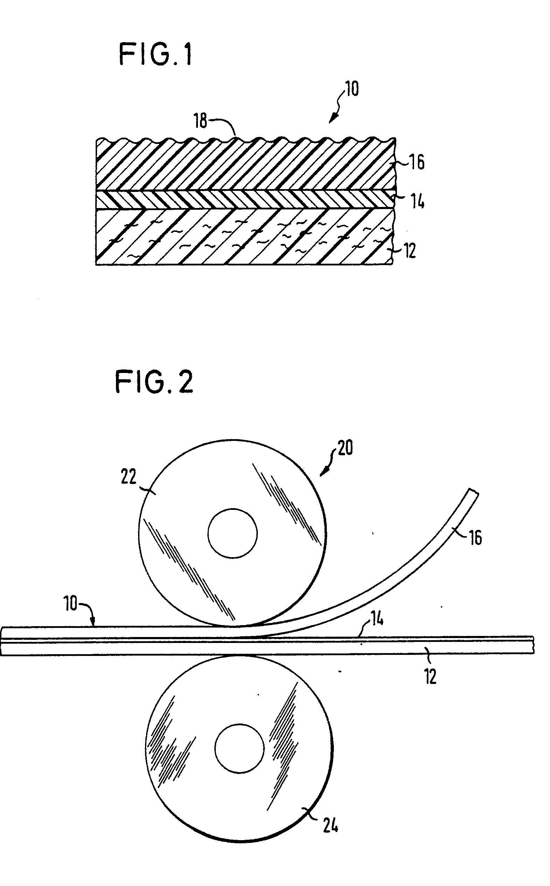

Der in Fig. 1 allgemein durch das Bezugszeichen 10 angedeutete Fußbodenbelag für die Naßbereiche und das Cockpit eines Flugzeuges weist eine untere Schicht as einem Laminat 12 auf, die aus einem Phenol- oder einem anderen Harz mit einer Faserverstärkung besteht. Die Fasern können als Gewebe oder Vlies in das Harz eingebettet sein und aus Glas, Baumwolle, Polyamid oder Aramid bestehen.

Diese relativ starre und dem Fußbodenbelag die mechanische Festigkeit gebende Laminatschicht 12 hat eine Dicke von etwa 0,5—0,8 mm.

Auf die gemäß der Darstellung in Fig. 1 obere Fläche des Laminates 12 ist eine Primer- bzw. Grundierungsschicht 14 aufgebracht. Bei dieser Grundierung handelt es sich um feuchtigkeitsempfindliche Lösungen mehrfunktioneller Silane bzws. Polysiloxane in organischen Lösungsmitteln; gute Ergebnisse wurden mit der Grundierung VP 3243 und G719, wie sie von der Wacker-Chemie GmbH, München, vertrieben werden, oder mit dem Xylopren-Haftvermittler HV—L der Bayer AG erreicht.

Auf diese Primer-Schicht 14 ist dann eine Schicht aus einem flammwidrigen Polysiloxan aufvulkanisiert worden, wie sie in der EP—A—0051212 beschreiben ist. Dieses flammwidrige Polysiloxan besteht aus einem Diorgano-Polysiloxan, feinzerteilter Kieselsäure und/oder anderen Füllstoffen, feinzerteiltem Titandioxid, Platin, einem Härtungsmittel sowie einer Stickstoffverbindung. Die Vulkanisation des Siloxans erfolgt durch peroxidische Vernetzung.

Die freie, als Trittfläche dienende Oberfläche der Schicht 16 aus dem Polysiloxan ist mit einer Struktur versehen, wie in Fig. 1 durch die regelmäßigen Wölbungen 18 angedeutet ist. Diese Struktur ist zweckmäßigerweise als imitierte Kordelung mit parallelen Rillen ausgebildet.

Fig. 2 zeigt ein einstufiges Verfahren zur Herstellung eines solchen Fußbodenbelages mittels einer auch als "AUMA" bezeichneten Rotationsvulkanisiermaschine, die eine Heizwalze 22 und eine Gegenwalze 24 aufweist. Die Heizwalze 22 ist mit einer nicht dargestellten, rillenförmigen Oberflächenstruktur versehen, wobei die Rillen parallel zur Achse der Heizwalze 22 verlaufen. Diese Rillenstruktur führt zur oben erwähnten imitierten Kordelung auf der freien Oberfläche der Schicht 16.

In dem Spalt zwischen den beiden Walzen 22 und 24 werden das mit der Primerschicht 14 versehene Laminat 12 und die Schicht 16 aus dem Polysiloxan zusammengeführt, die von einer auch als "Puppe" bezeichneten Rolle abgewickelt wird.

Die Heizwalze 22 dreht sich mit einer relativ geringen Geschwindigkeit, wobei beispielsweise 12 Minuten für eine einzige Umdrehung benötigt werden. In dem Walzenspalt, dessen Breite veränderbar ist und damit an die Dicke des herzustellenden Fußbodenbelages 10 angepaßt werden kann, werden die Schicht 16 aus dem Polysiloxan und das Laminat 12. zusammengedrückt und gleichzeitig das Polysiloxan durch die Temperatur von etwa 160°C der Heizwalze 22 zur Stufe A vulkanisiert.

Nach dem Verlassen dieser Rotationsvulkanisiermaschine 20 ist die Schicht 16 aus dem Polysiloxan fest mit dem Laminat 12 verbunden; anschließend wird dieses Schichtengebilde einer weiteren Temperung bzw. Nachvulkanisation unterzogen, wodurch die Vulkanisationsstufe B erreicht wird.

Da das Laminat 12 relativ starr ist, muß diese Temperung im ebenen Zustand des Schichtengebildes erfolgen.

Bei dem fertigen Fußbodenbelag 10 hat das Laminat 12 eine Dicke von etwa 0,5—0,8 mm, während die Schicht 16 aus dem Polysiloxan eine Dicke von 0,3 bis 0,5 mm hat, und zwar jeweils an dem tiefsten Punkten der Struktur 18 gemessen.

Als Alternative zu dem in Fig. 2 dargestellten Herstellungsverfahren kann die Walze 22 auch unbeheizt sein, wodurch bei Raumtemperatur die Schicht 16 aus dem Polysiloxan auf das Laminat 12 aufgedrückt wird. In einem zweiten Schritt wird. dann dieses Schichtengebilde mittels einer AUMA entsprechend der Darstellung in Fig. 2 ausvulkanisiert; dieser Vulkanisation schließt sich dann die Temperung auf die Stufe B an.

Vor dem Aufbringen der Primerschicht 14 muß die Oberfläche des Laminates 12 in der üblichen Weise bearbeitet, insbesondere gereinigt und getrocknet werden; in einigen Fällen ist es zweckmäßig, das grundierte Laminat mindestens 15 Minuten lang an der Luft zu trocknen.

**Patentansprüche**

1. Fußbodenbelag, insbesondere Für Flugzeuge, bestehend aus einer starren Unterschicht und einer oberen Kunststoffschicht, dadurch gekennzeichnet, daß die starre Schicht aus einem ausgehärteten, faserverstärkten Laminat (12) auf Phenolharzbasis besteht, auf die unter Einfügung einer Primer- bzw. Grundierungsschicht (14) eine Schicht aus einen flammwidrig eingestellten Polysiloxan (16) aufvulkanisiert ist.

2. Fußbodenbelag nach Anspruch 1, dadurch gekennzeichnet, daß eine Verstärkung aus Glas-, Baumwoll-, Aramid oder Polyamid-Fasern verwendet ist.

3. Fußbodenbelag nach Anspruch 1 oder 2, dadurch gekennzeichnet, daß das Laminat (12) ein Fasergewebe oder Faservlies, insbesondere aus Glasfasern, enthält.

4. Fußbodenbelag nach einem der Ansprüche 1 bis 3, dadurch gekennzeichnet, daß das flammwidrige Polysiloxan aus einem Diorgano-Polysiloxan, feinzerteilter Kieselsäure und/oder anderen Füllstoffen, feinzerteiltem Titandioxid, Platin, einem Härtungsmittel sowie einer Stickstoffverbindung besteht.

5. Fußbodenbelag nach Anspruch 1, dadurch gekennzeichnet, daß als Primer feuchtigkeitsempfindliche Lösungen mehrfunktioneller Silane bzw. Polysiloxane in organischen Lösungsmitteln verwendet werden.

6. Fußbodenbelag nach einem der Ansprüche 1 bis 5, dadurch gekennzeichnet, daß die Schicht (16) aus dem flammwidrigen Polysiloxan mit einer rillenförmigen Profilierung (18) versehen ist.

### Revendications

.1. Revêtement de sol, notamment pour avions, constitué d'une couche inférieure rigide et d'une couche supérieure en matière plastique, caractérisé en ce que la couche rigide est constituée d'un stratifié (12) à base de résine phénolique, qui est durci, qui est renforcé par des fibres, et sur lequel est déposée par vulcanisation, avec interposition d'une couche primaire ou d'une couche de base (14), une couche de polysiloxane (16) ignifuge.

2. Revêtement de sol suivant la revendication 1, caractérisé en ce qu'un renfort en fibre de verre, en fibre de coton, en fibre aramide ou en fibre polyamide est utilisé.

3. Revêtement de sol suivant la revendication 1 ou 2, caractérisé en ce que le stratifié (12) comprend un tissu en fibre ou un tissu non tissé en fibres, notamment en fibres de verre.

4. Revêtement de sol suivant l'une des revendications 1 à 3, caractérisé en ce que le polysiloxane ignifuge est constitué d'un diorgano-polysiloxane, d'acide silicique à l'état finement divisé et/ou d'autres charges, de dioxyde de titane à l'état finement divisé, de platine, d'un agent de durcissement, ainsi que d'un composé azoté.

5. Revêtement de sol suivant la revendication 1, caractérisé en ce que comme couche primaire sont utilisés des solutions sensibles à l'humidité de silanes ou de polysiloxanes plurifonctionnels dans des solvants organiques.

6. Revêtement de sol suivant l'une des revendications 1 à 5, caractérisé en ce que la couche (16) en le polysiloxane ignifuge est munie d'un profilage (18) en forme de rainures.

### Claims

1. Floor covering, especially for aircraft, consisting of a rigid lower layer and an upper plastics layer, characterized in that the rigid layer consists of a fully cured, fibre-reinforced laminate (12) based on phenolic resin, onto which a layer of a polysiloxane (16), formulated to be fire-retardant, is vulcanized, with interposition of a layer of primer or base coat (14).

2. Floor covering according to Claim 1, characterized in that a reinforcement of glass, cotton, aramid or polyamide fibres is used.

3. Floor covering according to Claim 1 or 2, characterized in that the laminate (12) contains a woven or non-woven fabric of fibres, especially of glass fibres.

4. Floor covering according to one of Claims 1 to 3, characterized in that the fire-retardant polysiloxane consists of a diorganopolysiloxane, finely divided silica and/or other fillers, finely divided titanium dioxide, platinum, a curing agent and a nitrogen compound.

5. Floor covering according to Claim 1, characterized in that the primers used are moisture-sensitive solutions of polyfunctional silanes or polysiloxanes in organic solvents.

6. Floor covering according to one of Claims 1 to 5, characterized in that the layer (16) of fire-retardant polysiloxane is provided with a ridged profile (18).

# FIG.1

# FIG.2